# EUROPEAN PATENT APPLICATION

(11) **EP 1 575 270 A1**
(43) Date of publication of application: **14.09.2005**
(21) Application number: 05101476.9
(22) Date of filing: 25.02.2005
(51) Int. Cl.: H04N 5/225

(54) **A camera apparatus having a still camera element and a camcorder element**

(30) Priority: 10.03.2004 KR 2004016024
(71) Applicant: SAMSUNG ELECTRONICS CO., LTD., Gyeonggi-Do 442-742 (KR)
(72) Inventor: Lee, Chang-hee, Yeongtong-dong,Yeongtong-gu,Gyeonggi-do (KR)
(74) Representative: Geary, Stuart Lloyd

(57) **Abstract**

An image photographing apparatus is capable of photographing a still image and a motion picture through separate, dedicated lenses. The image photographing apparatus has a first lens of a first camera part for photographing a motion picture, a second lens of a second camera part for photographing a still image, a mode selection switch for selecting one of a motion picture mode for photographing the motion picture through the first lens and a still-image mode for photographing the still image through the second lens, and a controller for selectively driving one of the first and the second camera parts according to the mode selected by the mode selection switch.

## Description

The present invention relates to a camera apparatus comprising a still camera image capture unit, a camcorder image capture unit and means for selecting either the still camera image capture unit or the camcorder image capture unit.

Apparatus for capturing images are traditionally divided into a stills camera for capturing still images and a camcorder for capturing moving images. Due to the distinctive functions provided by the camera and the camcorder, these have usually been produced and sold separately. Therefore, a user has had to purchase the camera and the camcorder separately in order utilise both devices. This is expensive and a burden to the consumer as both devices have to be carried around.

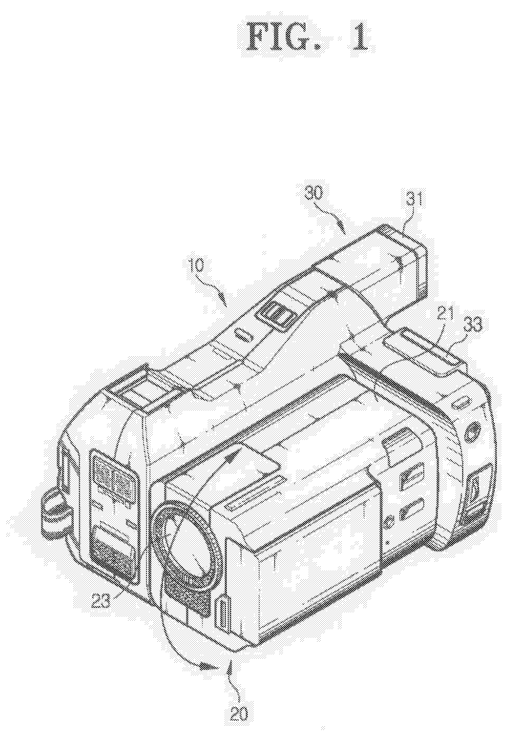

To overcome the above problem, image photographing apparatus (sometimes referred to as a camera apparatus) combining both a camera and a camcorder has been produced. Such a known camera apparatus is shown in Figure 1.

Referring to Figure 1, a known camera apparatus comprises a main body 10, a camera unit 20, a display device 30 and a controller.

The main body 10 comprises a deck in which a tape cassette for recording captured moving images is mountable, and a flash memory mounting in which flash memory for recording still images is mountable.

The camera unit 20 is located at one side of the main body 10 and comprises a camcorder part for moving images and a camera part for capturing still images. The camera part and the camcorder part are aligned in a housing 21 so that a camcorder part lens 23 and a camera part lens (not shown) are located on opposite sides of the body 10 to each other. The housing 21 is rotatably mounted to one side of the main body 10 by a hinge part. Between the main body 10 and the housing 21, a mode sensor which senses the rotation of the housing 21 is provided. This checks which lens is selected. Due to the inclusion of the mode sensor, a user selects to use either the camera or the camcorder by turning the housing 21 with respect to the main body 10 by 180°. For example, if the camera part lens (not shown) is directed to the front, the mode sensor senses that the camera part is selected. Alternatively, if the camcorder part lens 23 is directed to the front as shown in Figure 1, the mode sensor senses that the camcorder part is selected.

The display device 30 is located on a rear portion of the main body 10 and comprises a viewfinder 31 which shows the subject whose image is to be captured by the camcorder part or the camera part, and a liquid crystal display (LCD) 33.

The controller (not shown) is provided in the main body 10. The controller determines which of the camera part and the camcorder part is selected in dependence on indications provided by the mode sensor, and controls the camera part and the camcorder part to either capture a still image or a moving image. Therefore, the moving image captured by the camcorder part is recorded on the tape located in the deck, and the still image captured by the camera part is recorded onto flash memory located in the flash memory mounting portion.

For capturing moving pictures, the housing 21 of the camera unit 20 is turned so that the camcorder part lens 23 is directed towards the front. The controller determines that the camcorder part is selected, using the mode sensor, and controls the camcorder part to record the captured moving images on the cassette tape. When a user wants to capture still-images, the camera unit 20 is turned back by 180° so that the camera part lens is directed towards the front. Therefore, the controller determines that the camera part is selected using the mode sensor, and controls the camera part to record the still images on the flash memory. Accordingly, the user needs to carry only one apparatus for both capturing both moving and still images.

However, the known camera apparatus described above, which integrally comprises the functions of the camcorder and the camera, has a problem because it is inconvenient to operate. This is because the user has to turn the camera unit 20 by 180° to switch between the camcorder and stills camera function and vice versa.

An object of the present invention is to address at least the above problems and/or disadvantages and to provide the advantages described below. Accordingly, an object of the present invention is to provide an improved camera apparatus in which a camera lens and a camcorder lens face in the same direction, and a switch is provided to select either the stills camera or the camcorder function, thereby facilitating the manual operation and minimizing the size of the apparatus.

The present invention relates to a camera apparatus comprising a still camera image capture unit, a camcorder image capture unit and means for selecting either the still camera image capture unit or the camcorder image capture unit.

A camera apparatus according to the present invention is characterised in that the still camera image capture unit and the camcorder image capture unit point in the same direction concurrently.

An additional optional and/or preferred feature is set forth in claim 2 as appended hereto.

An embodiment of the present invention will now be described, by way of example only, and with reference to Figures 2 to 4 of the accompanying drawings, in which:
Figure 1 is a perspective view of a known image photographing (camera) apparatus capable of capturing still and moving images using dedicated lenses;
Figure 2 is a perspective view of a camera apparatus according to an embodiment of the present invention;
Figure 3 is a front view showing a lens part of the camera apparatus of Figure 2; and
Figure 4 is a schematic block diagram of the camera apparatus according to an embodiment of the present invention.

In the following description, it is understood that the same drawing reference numerals refer to the same elements, features and structures throughout the drawings. Descriptions of known functions or constructions have been omitted for the sake of conciseness

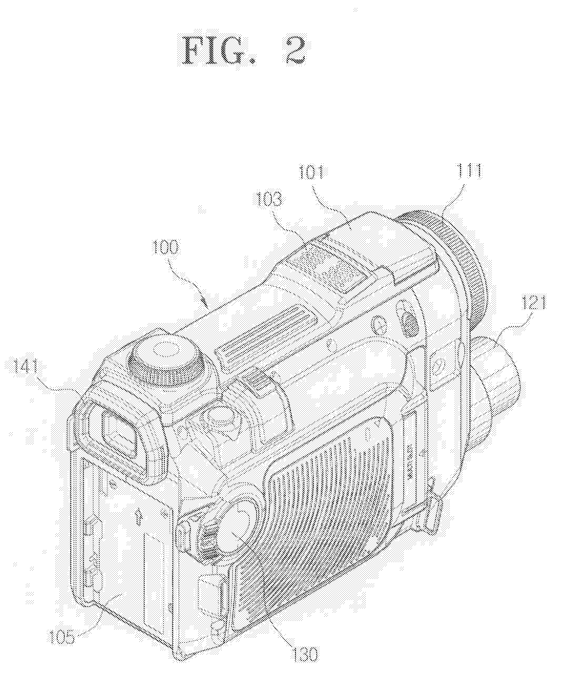

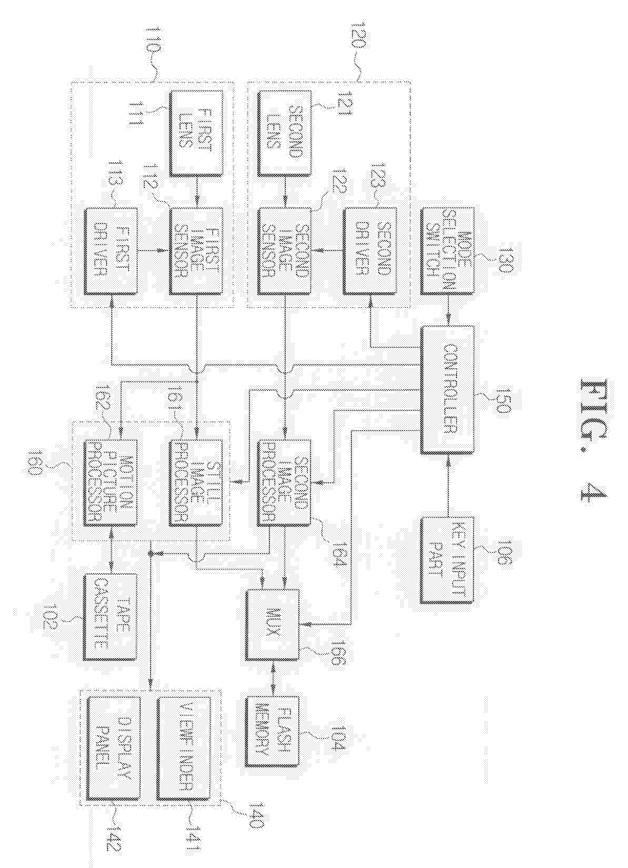

Referring to Figures 2 to 4, a camera apparatus according to an embodiment of the present invention comprises a main body 100, a first camera part 110, a second camera part 120, a mode selection switch 130, a display device 140 and a controller 150.

The main body 100 comprises a recorder for recording moving images or a still image onto a recording medium that is removable from the main body 100. The recording medium may be a hard disc, a memory stick, a digital video disc (DVD), a cassette tape or any other medium capable of recording digital data. A cassette tape 102 for recording moving images is employed by way of example, and a deck (not shown) is provided to load the tape cassette 102 into the main body 100. A deck door (not shown) is attached at one side of the main body 100 into which the tape cassette 102 is mounted. The door can be opened and closed. A portion of the bottom of the main body 100 is opened by the deck door allowing the deck to receive the cassette tape 102. The deck door and the deck will not be described in detail for the sake of conciseness since they are known by those skilled in the art. In addition, the present embodiment preferably employs flash memory for the recording medium for still images, and so the main body 100 also comprises a flash memory mounting portion.

In Figure 2, a flash 101 is provided on a top of the main body 100, and towards the rear of the flash 101, a microphone unit 103 is provided to obtain sounds to be recorded as well. Towards the rear of the main body 100, a battery mounting portion 105 is provided for the mounting of a battery, which supplies power to the camera apparatus.

The first camera part 110 is a camcorder for capturing moving images. In this embodiment, a digital camcorder is used. The first camera part 110 comprises a first lens 111 for capturing external images, a first image sensor 112 for converting the moving images or the still images captured by the first lens 111 to an electric signal, and a first driver 113 controlled by the controller 150 to drive the first image sensor 112. The first lens 111 is mounted on the front of the main body 100, and the flash 101 is located at a position higher than the first lens 111. A charged coupled device (CCD) is used for the first image sensor 112. The first image sensor 112 has fewer pixels than a second image sensor 122 which corresponds to the lens of the digital video camera. When the mode selection switch 130 is in a mode for capturing moving images or a mode for capturing still images by the first camera part 110, the controller 150 controls the first driver 113 to operate the first image sensor 112. The camera part 110 can capture both moving images and still images. Since the first camera part 110 is used in known digital video cameras, such as digital camcorders, a detailed description thereof will be omitted.

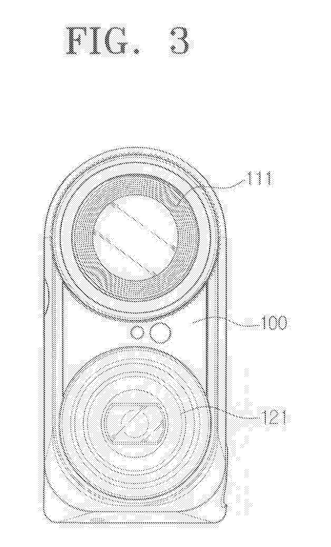

The second camera part 120 is a digital stills camera (DSC) for capturing still images. The second camera part 120 comprises a second lens 121, for digital still cameras, a second image sensor 122 for converting the still image captured by the second lens 121 into an electrical signal, and a second driver 123 for driving the second image sensor 122. The second lens 121 and the first lens 111 are located on the same surface, parallel to each other. Therefore, the first and the second lenses 111,121 face in the same direction, and the optical axes of the first and the second lenses are parallel at a predetermined distance from each other. Although the second lens 121 may be located at any positions with respect to the first lens 111, it is preferable that the second lens 121 is located directly below the first lens 111, as shown in Figure 3. In this case, since the flash 101 is located above the first lens 111, for the camcorder, direct incidence of the light from the flash 101 to the second lens 121 is prevented while capturing the still image through the second lens 121. Therefore, by operating the mode selection switch 130, either the first 111 or the second lens 121 is selected for capturing moving images or still images, respectively. The CCD used for the second image sensor 122 has more pixels than the first image sensor 112. The second driver 123 of the second camera part 120 is controlled by the controller 150. More specifically, when the still image capture mode is selected by the mode selection switch 130, the controller 150 controls the second driver 123 to drive the second image sensor 122. The second image sensor 122 converts the light received through the second lens 121 into an electrical signal thus capturing the still image. Since the operation and structure of the second camera part 120 is the same as that of a known digital stills camera, a detailed description thereof is omitted.

The mode selection switch 130, provided on one side of the main body 100, has at least two contacts for selecting either one of the moving image mode or the still-image mode. In this embodiment, a rotary switch is used, although other suitable switching means may be used instead. The mode selection switch 130 may comprise other functions besides the image capture function. For example, the mode selection switch 130 may play back captured moving images or may display a still image using the display device 140.

The display device 140 displays images captured by the first and the second camera parts 110 and 120. For this, the display device 140 comprises a viewfinder 141 located at a rear portion of the main body 100 and a display panel 142 located on one side of the main body 100. A liquid crystal display (LCD) is used for the display panel 142. Since the operation and structure of the viewfinder 141 and the display panel 142 are well known, a detailed description thereof is omitted.

The controller 150 determines the image capture mode in accordance with the signal transmitted from the mode selection switch 130. In dependence on this determination, either the first camera part 110 or the second camera part 120 is operated. If the mode selection switch 130 is in the moving image mode, the controller 150 operates the first camera part 110, and if the mode selection switch 130 is in the still-image mode, the controller 150 operates the second camera part 120. In the controller 150, predetermined control data is input and set by a key input part 106. In addition, the controller 150 selectively operates and controls either a first image processor 160, for processing the signal from the first camera part 110, or a second image processor 164, for processing the signal from the second camera part 120. This selection is made in dependence on the image capture mode selected by the mode selection switch 130. The first image processor 160 comprises a motion picture processor 162 for processing the moving images captured by the first camera part 110 and a still-image processor 161 for processing the still image captured by the second camera part 120. The motion picture processor 162 processes an input moving image signal to record the moving image signal onto a moving image recording medium such as the cassette tape 102. The moving image signal is converted into a signal which can be displayed by the display device 140.

The still-image processor 161 records an input still image signal representative of the captured still image onto the flash memory 104. The still-image processor 161 converts the still image signal into a signal which can be displayed using the display device 140. The second image processor 164 also compresses the captured still image in order to maximise the number of images stored on the flash memory 104. The compressed still image is then recorded onto the flash memory 104, and processes the still image into a signal which can be displayed by the display device 140.

The signals processed by the still-image processor 161 of the first image processor 160 and the second image processor 164 are recorded onto the flash memory 104 by a multiplexer (MUX) 166. The MUX 166 is controlled by the controller 150 to select the appropriate signal transmitted from either one of the first or the second camera part 110 or 120 corresponding to the set photographing mode. Furthermore, the MUX 166 operates in conjunction with the mode selection switch 130 so that the MUX 166 is turned on or off depending on whether the second camera part 120 is on or off.

Hereinbelow, the operation of the camera apparatus will now be described with reference Figures 2 to 4.

A power switch (not shown) on the main body 100 (Figure 2) is turned on. The mode selection switch 130 is then set to either the moving image capture mode or the still-image mode. The controller 150 determines the image capture mode of the mode selection part 130 and controls the first 110 or the second camera part 120 to photograph a subject using the appropriate image capture mode. For instance, when the mode selection switch 130 is set to moving image mode, the controller 150 operates the first camera part 110.

In the moving image mode, when a command for image capture is input through the key input part 106, the controller 150 instructs the first driver 113 to operate the first image sensor 112. The moving image captured through the first lens 111 is converted to an electrical signal using the first image sensor 112. The electrical signal is converted into a signal recordable on the tape recorder 102 by the motion picture processor 162. The converted moving image signal is recorded on the tape recorder 102 and displayed in real-time through the viewfinder 141 and the display panel 142. The moving image signal recorded on the tape recorder 102 can be transmitted to external apparatuses, such as a personal computer (PC) using a universal serial bus (USB) port, or the like. A still image can also be captured by the first camera part 110, while in the moving image mode. The still image photographed by the first camera part 110 is transmitted to the still image processor 161 and converter into a signal which is recordable on the flash memory 104.

If the user wants to change from the moving image mode to the still-image mode, the user uses the mode selection switch 130 to select the still-image mode. The controller 150 instructs the second camera part 120 to operate in the still-image mode. Here, when the command for image capture is input through the key input part 106, the controller 150 controls the second driver 123 to operate the second image sensor 122. The still image captured using the second lens 121 is converted into an electrical signal using the second image sensor 122. The electrical signal is converted by the second image processor 164 into a signal recordable on the flash memory 104. The converted still image signal is recorded on the flash memory 104 using the MUX 166, and displayed in real-time using either the viewfinder 141 or the display panel 142. By selectively operating the key input part 106, the user can also transmit the image signal recorded on the flash memory 104 to the PC using the USB port, or record it on other suitable auxiliary memory.

As can be appreciated from the above description, the camera apparatus according to an embodiment of the present invention has the lenses 111 and 121 of the two camera parts 110 and 120, respectively, which capture either moving images or a still image. This is because both lenses 111 and 121 face the same direction as they are mounted on the front of the main body 100. In addition, the camera apparatus comprises a mode selection switch 130 for selecting one of the first or the second lenses 111 and 121 for photographing. Therefore, the user is able to select a desired image capture mode by operating the mode selection switch 130, and accordingly, the first or the second camera part 110 or 120 is instructed to photograph either moving or the still images. This embodiment not only enables integral construction of the digital still camera and the camcorder but also facilitates the user's operation of selecting the photographing modes by use of the mode selection switch 130.

The lenses which are for a camera and a camcorder are mounted on a common surface to face in the same direction, and the desired lens to be used can be selected by the mode selection switch 130. Therefore, the selection operation is simplified.

## Claims

1. A camera apparatus (100) comprising a still camera image capture unit (121), a camcorder image capture unit (111) and means (150) for selecting either the still camera image capture unit (121) or the camcorder image capture unit (111), **characterised in that** the still camera image capture unit (121) and the camcorder image capture unit (111) point in the same direction concurrently.

2. A camera apparatus (100) according to claim 1, comprising a still camera element (160) operable to receive images captured using either the still camera image capture unit (121) or the camcorder image capture unit (111).

3. An image photographing apparatus having a first camera part for motion-picture photographing and a second camera part for still-image photographing, the image photographing apparatus comprising:
a first lens of the first camera part;
a second lens of the second camera part, which is mounted in the same plane as the first lens of the first camera part;
a mode selection switch for selecting one of a motion picture mode for photographing a motion picture through the first lens and a still-image mode for photographing a still image through the second lens; and
a controller for selectively driving the first camera part or the second camera part according to the photographing mode selected by the mode selection part.

4. The image photographing apparatus of claim 3, wherein the second lens is disposed below the first lens.

5. The image photographing apparatus of claim 4, wherein a flash is mounted at a higher position than the first lens.

6. An image photographing apparatus comprising:
a main body detachably mounting a tape cassette therein;
a first lens mounted on a front of the main body;
a first camera part mounted in the main body to photograph and record a motion picture captured by the first lens;
a second lens mounted on the front of the main body at a predetermined distance from the first lens, and facing the same direction as the first lens;
a second camera part mounted in the main body to photograph and record a still image captured by the second lens;
a display device mounted in the main body to display the image captured through the lens of either the first camera part and the second camera part as selected;
a mode selection part mounted at one side of the main body to select one of a motion picture mode for photographing a motion picture by the first camera part and a still-image mode for photographing a still image by the second camera part; and
a controller for selectively driving the first camera part or the second camera part according to the photographing mode selected by the mode selection part.

7. The image photographing apparatus of claim 6, wherein the second lens is disposed below the first lens.

8. The image photographing apparatus of claim 7, wherein the display device comprises:
a viewfinder mounted in the main body to show the image captured by one of the first and the second camera parts; and
a display panel rotatably mounted on at least one axis in the main body in order to show the captured image independently of the viewfinder.

9. The image photographing apparatus of claim 7, wherein the main body comprises a flash memory mounting portion for detachable mounting of a flash memory for recording the still image.

10. The image photographing apparatus of claim 7, wherein the main body comprises a microphone unit for receiving external sound signals.

11. A method of photographing images using an image photographing apparatus having a first camera part for motion-picture photographing and a second camera part for still-image photographing, the method comprising the steps of:
mounting a first lens of the first camera part and a second lens of the second camera part in the same plane with a housing;
selecting one of a motion picture mode for photographing a motion picture through the first lens and a still-image mode for photographing a still image through the second lens using a mode selection switch; and
selectively driving the first camera part or the second camera part according to the photographing mode selected by the mode selection part using a controller.

12. The method of claim 11, wherein the second lens is disposed below the first lens.

13. The method of claim 12, wherein a flash is mounted at a higher position than the first lens.
